# EUROPEAN PATENT SPECIFICATION

(11) **EP 1 565 300 B1**
(45) Date of publication and mention of the grant of the patent: **08.04.2009**
(21) Application number: 03772946.4
(22) Date of filing: 04.11.2003
(51) Int. Cl.: B29C 45/33, B29C 45/56

(54) **APPARATUS AND METHOD FOR MANUFACTURING HOLDERS, IN PARTICULAR CRATES**
VERFAHREN UND VORRICHTUNG ZUR HERSTELLUNG VON HALTERN, INSBESONDERE FLASCHENKÄSTEN
APPAREIL ET PROCEDE PERMETTANT DE FABRIQUER DES EMBALLAGES, NOTAMMENT DES CAISSES A CLAIRE-VOIE

(30) Priority: 05.11.2002 NL 1021838
(43) Date of publication of application: 24.08.2005
(73) Proprietor: ECIM Technologies B.V., 1507 DG Zaandam (NL)
(72) Inventor: HOOGLAND, Hendricus, Antonius, NL-1562 ZM Krommenie (NL)
(74) Representative: Winckels, Johannes Hubertus F.
(86) International application number: PCT/NL2003/000764
(87) International publication number: WO 2004/041506

(56) References cited:
- US-A- 4 025 022
- US-B1- 6 322 349
- PATENT ABSTRACTS OF JAPAN vol. 0185, no. 24 (M-1682), 4 October 1994 (1994-10-04) & JP 6 182835 A (NISSEI PLASTICS IND CO), 5 July 1994 (1994-07-05)
- PATENT ABSTRACTS OF JAPAN vol. 0062, no. 07 (M-165), 19 October 1982 (1982-10-19) & JP 57 115330 A (TOSHIBA KIKAI KK), 17 July 1982 (1982-07-17)
- PATENT ABSTRACTS OF JAPAN vol. 0183, no. 17 (M-1622), 16 June 1994 (1994-06-16) & JP 6 071707 A (AIDA ENG LTD), 15 March 1994 (1994-03-15)

## Description

The invention relates to a mold for manufacturing holders. The invention further relates to a method for manufacturing holders.

As a rule, the injection molding of holders such as crates in molds takes place on relatively large, heavy presses, which is expensive and requires much space. A further drawback of the known holders is that the wall thicknesses of the different parts thereof will be relatively great, as, otherwise, no suitable ratio between on the one hand, flow path length and flow path cross section and, on the other hand, flow path length and melt of the plastic is obtained. Upon reduction of the wall thickness, the injection pressure for the plastic will need to be increased, while the closing pressure required for keeping the mold closed will increase further. A further drawback of this known method is that cavities in the holder such as, for instance, in hollow wall parts and the like are virtually not possible, in particular with small wall thickness, since the required solid cores will not be able to resist the pressure built up by the injected plastic in the mold and will bend, break and/or will become damaged in a different manner, while, furthermore, often, problems in clearance will occur.

JP 06238721 discloses an injection compression molding machine for producing inner boxes of refrigerators, having a fixed mold part and a mold part moveable relative to said fixed mold part in a first (closing) direction, guide elements being provided between said fixed and said moveable mold part. In the fixed mold part a mold cavity is provided, whereas on the moveable wall part a sliding member is provided moveable in said first direction in between two trapezoid slides, one on either side of said slide member, in sliding engagement therewith along a sliding connection which encloses a sharp angle with said first direction. When the slide member is moved in the first direction toward the fixed mold part the slides are forced apart.

At the start of a production cycle the moveable mold part is retracted, away from the fixed mold part whereas the slide member is retracted away from the fixed mold part, pulling the slides towards each other and creating a relatively large space between the lower ends of the slides and the lower end of the slide member, opposite an injection opening in the fixed mold part. Then the necessary amount of plastic material is introduced into the mold cavity, after which the moveable mold part is forced towards the fixed mold part and at the same time the slide member is forced between the slides, forcing these both in the first direction and apart. The movement of the moveable mold part and the slide member in the first direction is directly linked to the movement of the slides in the first direction and in a direction perpendicular to said first direction, resulting in a non-linear path of movement of the slides and an undesirable flow pattern of the plastic materials.

JP 57115330 discloses a mould according to the preamble claim 1.

It is an object of the invention to provide a mold for forming plastic holders such as crates, containers and the like, whereby at least a number of the drawbacks mentioned of the known mold and the method to be used therewith are obviated.

In particular, the invention aims to provide such a mold with which thin-walled holders can be formed, more in particular thin-walled holders with, at least partly, hollow wall parts.

A further object of the invention is to provide a mold with which the plastic can be introduced into the mold with relatively low pressure, which mold can be kept closed with relatively low closing pressure. In particular, the invention aims to provide such a mold with which holders with relatively long, complex flow paths can be formed.

A further object of the invention is to provide a mold with which holders can be formed having small clearance angles, which holders have a relatively great depth relative to their bottom surface.

Furthermore, the invention contemplates providing a method for manufacturing plastic holders such as crates, containers and the like, with which, with relatively low injection pressures and/or closing pressures, holders can be manufactured, in particular holders with complex structure, long, narrow flow paths and/or, at least partly, hollow walls.

The invention further aims to provide such a method with which different types of plastic can be processed, in particular also low melt plastics, with which, moreover, transparent, opaque as well as completely non-transparent holders can be manufactured.

In order to achieve at least a number of the above-mentioned and other objects, a mold according to the invention is characterized by the features of claim 1.

By using one or more moveable wall parts of a mold cavity in the mold, the advantage is achieved that at least upon injection of the plastic into the mold, the mold cavity has a relatively great volume, with few restricting passageways. Therefore, during injection, the flow paths will be relatively short, while the passageways the plastic has to travel are relatively large. As a result, the plastic can be introduced into the mold with relatively little pressure. Only when the plastic has been introduced into the mold cavity at least in part, then, during use, the or each moveable wall part is moved in the direction of an opposite wall part, so that the respective passageway is reduced. The plastic between the respective moveable wall part and the opposite wall part is then somewhat compressed and/or forced away to a part of the mold cavity located further away. Therefore, each time, the flow front of the plastic is shifted upon movement of the or each moveable wall part, so that the plastic is forced away, each time over a flow path matching the respective melt and passage opening of the flow path.

With a mold according to the invention, the, at least one moveable wall part is moved in a direction of movement including an angle with the direction of movement for opening and closing the mold. Usually, this latter will substantially coincide with the pressing direction of a press to be used with the mold, at least with the direction of pressure for the closing pressure. By having the or each moveable wall part move in the second direction of movement, wall parts can be formed which do not extend at right angles to the first direction of movement. Thus, for instance, sidewall parts of the holder can be formed when a bottom surface of the holder is approximately at right angles to the first direction of movement. With this, also, the important advantage is achieved that the load on the optional core parts in a direction including an angle with the first direction of movement can be considerably reduced, which is advantageous in particular when using relatively thin core parts as intended for forming partly hollow wall parts, channels and the like.

Herein, including an angle is understood to mean that the first and the second direction of movement are not parallel to each other. Preferably, the directions of movement include an angle of between 20° and 90°, more preferably between 45° and 90° and most preferably between 60° and 90°. As a result, a favorable load for the different parts is obtained. In a special embodiment, a mold according to the invention is **characterized in that** the first and second direction of movement are approximately at right angles to each other. Consequently, simple and advantageous movements of the two mold parts and of the or each moveable wall part are obtained as well as favorable loading thereof, in particular of core parts thereof.

In a mold according to the invention, two or more moveable wall parts can be provided, preferably such that they move from different sides of one or more core parts towards each other. By providing core parts in the mold, cavities in the holders to be formed can be provided.

In a particularly advantageous embodiment, a mold according to the invention is further characterized by the features of claim 7.

With a central core part, a main space of the holder can be formed in a simple manner. By placing one or more second core parts therearound, at a short distance therefrom, additional spaces can be formed, for instance in one or more longitudinal wall parts. Then, between the central core part and a respective adjoining second core part, for instance, a first wall of a longitudinal wall part can be formed, at the opposite side of the second core part a second wall thereof, between the second core part and the moveable wall part. Since this moveable wall part can first be brought into a retracted position and only when therebetween plastic has been introduced, is moved forward in the direction of the second core part, the plastic can simply flow between the two parts. Premature solidification or stagnating flow is prevented where necessary. Thus, thin walls of a hollow longitudinal wall or a part thereof can be obtained. The fact is that when opening the mold and taking the product out, the core parts will remain behind in the mold and the spaces formed by them will be open.

By using, with a mold according to the invention, moveable wall parts, furthermore, undercuts, openings and the like can be provided in the different wall parts of the holder, for instance handles, attachment openings and the like.

Preferably, a mold according to the invention is designed for forming holders with a relatively small wall thickness relative to the bottom surface and longitudinal wall thereof, while the holder is relatively deep with regard to the dimensions of this bottom surface. Especially with such a holder, it is advantageous when during injection of the plastic the flow paths are relatively short and wide, while, only after the plastic has been introduced into the mold cavity at least for the larger part, it is brought to its final form, to be completely filled with plastic. The fact is that during the movement of the wall parts, the plastic will only have to travel a relatively short flow path.

In a further advantageous embodiment, a mold according to the invention is further **characterized in that** also for at least a part of the bottom surface of the holder, a moveable wall part has been provided. With this, the advantage can be achieved that the plastic can be introduced into the mold cavity with even less pressure. Preferably, this respective moveable wall part has a direction of movement approximately parallel to the first direction of movement.

It is preferred that for each moveable wall part, in particular for each wall part moveable in a second direction, drive means are provided. Preferably, these are controllable independently of the movements of the mold parts in the first direction. As a result, each time, the moveable wall parts can be moved optimally. Preferably, the moveable wall parts are arranged for movement with a fully closed mold, but can also be designed such that they can already move upon closure of the mold. In the latter case, plastic will have to be prevented from flowing between the closing surfaces of the mold.

The invention further relates to an assembly of a press and a mold according to the invention, characterized by the features of claim 12.

The invention further relates to a method for forming holders and such products, such as crates, containers and other products with at least one space open towards the surroundings. According to the invention, such a method is characterized by the features of claim 14.

With such a method, which is preferably carried out with the aid of a mold according to the invention, the possibility is presented to form holders with relatively complex and/or large dimensions, with relatively small wall thicknesses and on relatively simple, light machines. With such a method, injection pressures and closing forces are relatively low with respect to those used in conventional injection molding techniques, while, moreover, a larger design choice is obtained. Further, with a method according to the invention, holders can be formed from a larger variety of materials, among which plastics with a low melt.

With a method according to the invention, the or each moveable wall part can be moved during introduction of the plastic, which can for instance be advantageous with plastics with a critical solidification range or, for instance, with crystalline plastics, so that these can be kept transparent. Also, with this, material properties of the plastics can be prevented from being adversely influenced. It is noted, for that matter, that since the plastic is introduced with an already low pressure, stresses in the plastic can be prevented for the larger part, at least be reduced, so that the holder will not contain much stress.

Alternatively, the or each moveable wall part can be moved after the plastic has been introduced, at least substantially, into the mold cavity, for instance at a filling of approximately 80%. As a result, the counter pressure upon injection remains low longer. It is then preferred that each moveable wall part is moved rapidly such that as a result of, primarily, friction in the plastic or between plastic and mold parts and/or compression of the plastic, adiabatic heat development occurs in the plastic. As a result, the viscosity of the plastic is reduced again or the plastic even becomes liquid again, so that it can effect a complete filling of the mold cavity even better and in an even simpler manner.

Naturally, also, combinations of the above-described movements can be used. Preferably, the plastic is introduced near or in a bottom surface of the holder. As a result thereof, problems in the flow and in particular in confluence of the plastic can be prevented at least for the larger part.

In the further subclaims, further advantageous embodiments of a mold, assembly, method and product according to the invention are described. In clarification of the invention, embodiments of a mold, assembly, method and product according to the invention will be further elucidated with reference to the drawing. In the drawing:
Fig. 1 shows, in top plan view, a holder according to the invention, shown here as a crate;
Fig. 2 shows, in cross-sectional side view along the line II-II in Fig. 1, a holder according to the invention;
Fig. 3 shows, in cross-sectional side view, a mold according to the invention, placed in a press, in closed condition with a mold cavity with maximum volume, i.e. with moveable wall parts in a retracted position, cross-sectioned along a plane corresponding to the section of the holder as shown in Fig. 2;
Fig. 4 shows the mold according to Fig. 3, with moveable wall parts moved forward; and
Figs. 5 and 5A show, in cross-sectional side view comparable to Figs. 3 and 4, a mold according to the invention, in an alternative embodiment.

In this description, identical or corresponding parts have identical or corresponding reference numerals. In this description, as an example, a crate, will be described, in particular a crate for bottles. However, the invention should not be taken as being limited thereto. Many other holders, provided or not provided with compartments, with all sorts of differently shaped bottom surfaces such as circular, rectangular, square, or with a different shape are possible within the framework of the invention. Also, holders can be formed with and without cavities in the side walls and/or bottom. The products can have (a) longitudinal wall(s) being at right angles to a bottom surface, but the or a longitudinal wall thereof can also be at an inclination relative to this bottom surface.

In a mold and method according to the invention, different plastics can be used, in particular thermoplastic plastics and blends. Crystalline plastics too and mixtures thereof can be used particularly well within the invention.

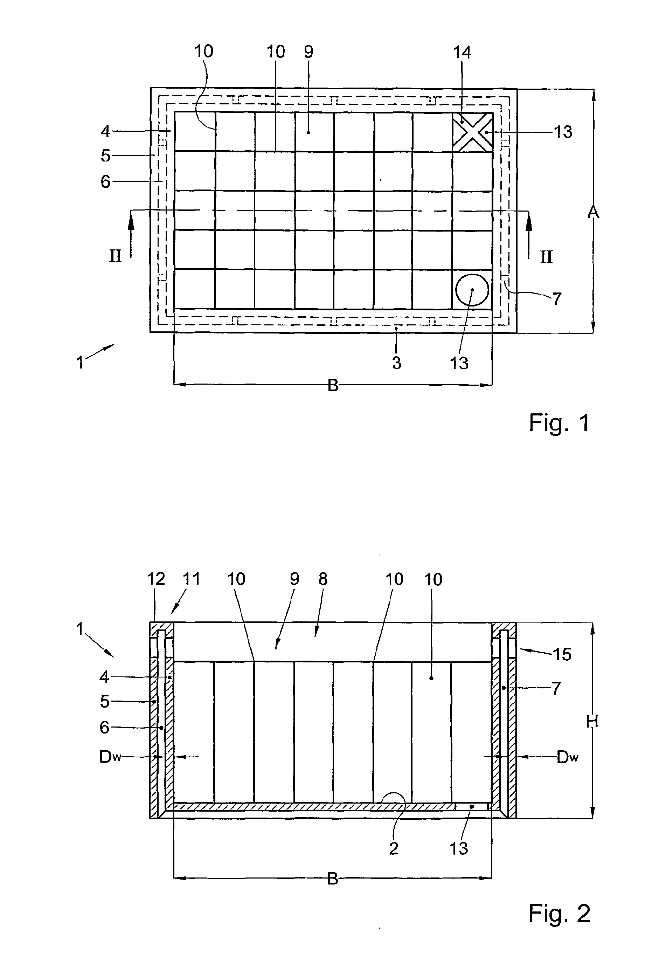

Fig. 1 shows, in top plan view, a holder 1, according to the invention, in the form of a bottle crate, to which the invention is not limited. Fig. 2 shows the holder 1 in cross-sectional side view. This holder 1 comprises a bottom surface 2 and a longitudinal wall 3 extending away therefrom. The longitudinal wall 3 is substantially double-walled, which means that it comprises a first wall 4, a second wall 5 and, located therebetween, a cavity or open space 6. The wall thickness Dw is relatively small relative to the dimensions A, B of the bottom surface 2 and the height H. The wall thickness can be, for instance, between some tens of millimeters and some millimeters, depending on, for instance, the holder dimensions, intended use and the like. Between the walls 4, 5 cross partitions 7 can be provided, preferably with a comparable wall thickness for rigidifying and increasing the bearing capacity. Within the longitudinal wall 3 and the bottom surface 2, an inner space 8 with a compartmentation is provided by cross walls 10. They reach to a point below the upper side 11 of the longitudinal wall 3. The top ends of the walls 4, 5 are interconnected by a carrier edge 12, preferably with a wall thickness comparable to that of the walls 4, 5. In the bottom surface 2, openings 13 can be provided, for instance circular, as shown at the bottom right-hand side, or formed by cross bars 14, as shown at the top right-hand side. Due to the provision of openings, material and weight, cooling time and/or closing pressure can be limited. In the longitudinal wall 3 handles 15 are provided at opposite sides.

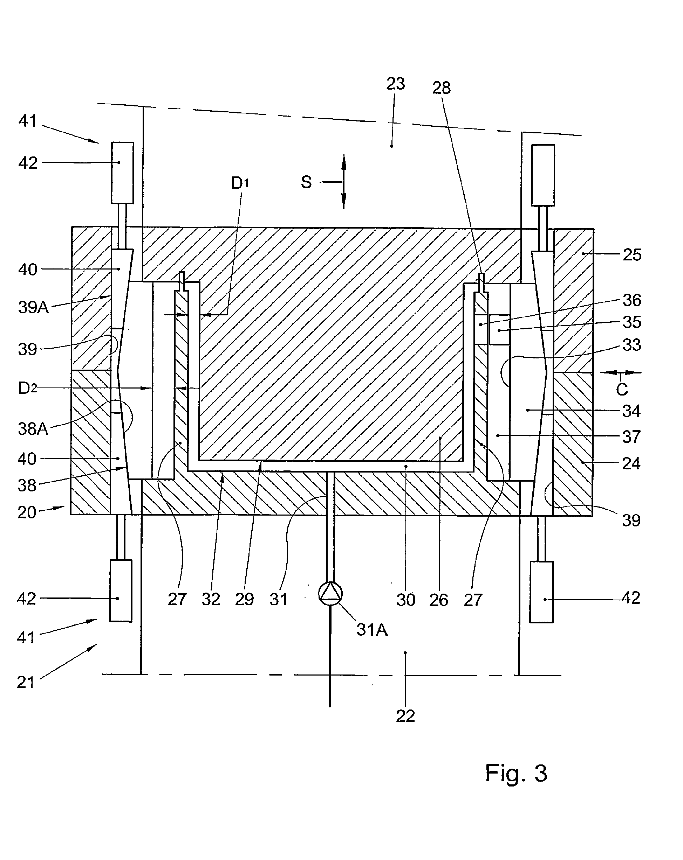

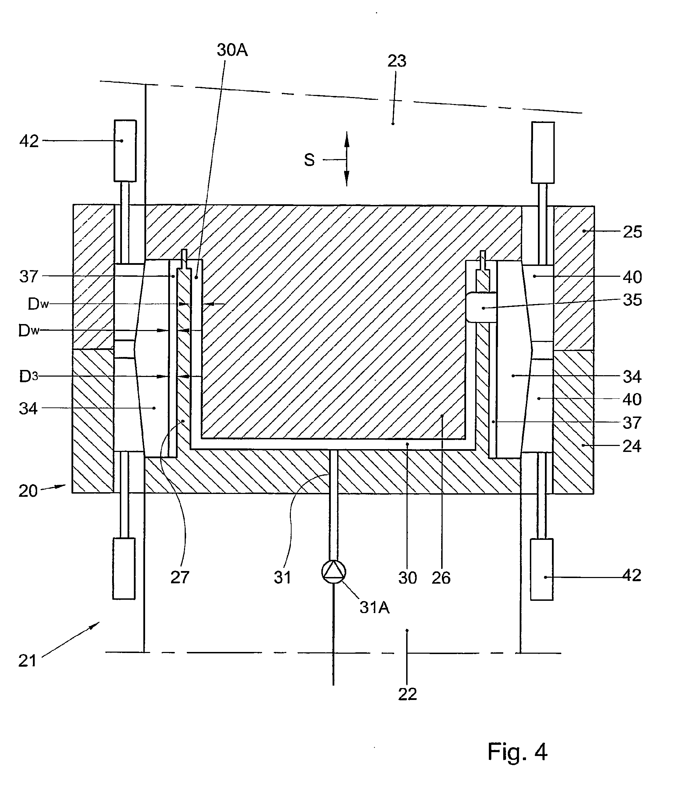

A holder 1 according to the invention can for instance be manufactured in a mold 20 according to Figs. 3 and 4. This mold 20 is included in an injection molding device, at least press 21 known per se, parts of a fixed table 22 of which, and a table moveable in relation thereto in a first direction of movement S are shown. The mold 20 comprises a first part 24 arranged on the fixed table, and a second part 25, moveable relative thereto and attached on the moveable table 23. Naturally, the first direction of movement S can have any orientation, for instance vertically as shown in Figs. 3 and 4, but also horizontally, by tilting the press 21.

The first part 24 comprises a central core part 26, for forming the internal space 8 of the holder 1. This central core part 26 is surrounded at all sides at a distance D1 by a second core part 27 provided on the first part 24 of the mold 20. The distance D1 corresponds to the wall thickness D of the first wall 4 of the holder 1. The second core part 27 corresponds in shape to the shape of the cavity 6 in the longitudinal wall 3 of the holder 1. Optionally, in the upper side of the second core part 27, pins 28 can be provided which fit into recesses in the second part 25 of the mold 20, for support thereof. As a result, openings are formed in the edge 12. Between a leading end 29 of the central core part 26 and the first part 24, a space 30 is left open for forming the bottom surface 2. In this space 30 a supply opening 31 terminates through which plastic can be introduced into the mold cavity 32.

At the side of the second core part 27 facing away from the central core part 26, in the embodiment shown on four sides, a moveable wall part 33 is provided in the form of a slide 34 which is moveable in a second direction of movement C. The surface facing the second core part 27 has the form of the outside of the respective part of the longitudinal wall 3. Optionally, on the slide 34, a projection 35 can be provided for forming the handle 15, which projection, to that end, can reach through an opening 36 into the second core part 27. For the sake of simplicity, projection 35 and opening 36 are only drawn on the right hand side.

In the position shown in Fig. 3, the slides 34 are shown in a retracted position, i.e. at a distance D2 from the second core part 27 which is greater than the desired wall thickness D3 of the second wall 5. Therefore, between the slide 34 and the adjoining core part 27, a relatively great, wide space 37 is provided, through which plastic can flow in a simple manner without much resistance.

At the rear side of the slide 34, inclining surfaces 38 are provided, in the embodiment shown two surfaces 38 inclining in opposite directions. Further, a flat running surface 39 is provided behind the slide, i.e. at the side thereof facing away from the second core part 27. Between the inclining surfaces 38 and the running surface 39, wedges 40 are provided with corresponding inclining surfaces 38A and running surfaces 39A. The wedges 40 are connected with drive means 41, in Figs. 3 and 4 designed as piston-cylinder assemblies 42, with which the wedges 40 can be moved from a first position shown in Fig. 3 to a second position shown in Fig. 4, and vice versa. By moving the wedges 40 to the second position, the slides 34 are moved inwards, i.e. towards the second core part 27. Consequently, the space 37 is reduced and with it, plastic present therein is forced away and/or somewhat compressed.

A mold 20 with press 21 can be used as follows.

The mold 20 is brought into the closed position shown in Figs. 3 and 4 and held closed by the press 21 with a relatively light closing pressure. The closing pressure is smaller than necessary for injection molding a similar holder with the aid of conventional injection molding technique and mold, which, customarily, can be defined from, substantially, the projected surface in the direction S, the flow paths, in particular the wall thicknesses, and the plastic used.

The slides 34 are brought into the retracted, first position, whereupon, via the supply opening 31, with the aid of means 31A suitable thereto, plastic is introduced into the space 30, preferably in melted, at least in substantially liquid form. From the space 30, the plastic flows via the spaces 30A between the central core part 26 and the second core part 27 over the second core part 27 into the spaces 37. Since the plastic in the spaces 37 experiences hardly any resistance, it can easily flow as far as in there without undesired pressure build-up and/or solidification of the plastic. Then, when substantially all necessary plastic has been introduced into the mold cavity 32, the driving means 41 are energized, so that the wedges 40 are moved to the second position and the slides 34 are forced in the direction of the second core part 27. Consequently, the plastic is forced further into the mold cavity 32, in particular up to the end of the space 37, for complete filling thereof.

As the direction of movement C includes an angle with the direction of movement S, a favorable load of the different parts is obtained. As the plastic can flow into and through the mold cavity 32 without much resistance, relatively low pressures will suffice. As a result, for instance, bending of the second core parts 27 and excessive wear are prevented. Moreover, as a result of this too, the necessary closing force can be kept low.

After the slides have been moved forwards maximally, the plastic can solidify and after, optionally, the slides are pulled back and the mold 20 is opened, the holder 1 can be taken out. As a result of the relatively low injection pressure, the product will be virtually stressless.

In Figs. 3 and 4, for clarity's sake, the openings for forming the partition walls 10 are omitted.

The slides 34 of a mold 20 can be moved so rapidly that in the plastic, adiabatic heat development occurs. As a result, the flow properties of the plastic can be further improved and, plastic which has possibly solidified, can be made liquid again. Alternatively, the slides 34 can also move slowly, so that the plastic is not heated or only to a very limited extent and already slightly solidifies during introduction. Also, the possibility exists to move the slides during introduction of the plastic already in the direction of the second position (Fig. 4) so that the plastic is continuously held in motion. This can be advantageous in particular with, for instance, crystalline plastics and plastics with a glass transition point and/or a low melt or when product properties of the plastic have to be accurately maintained.

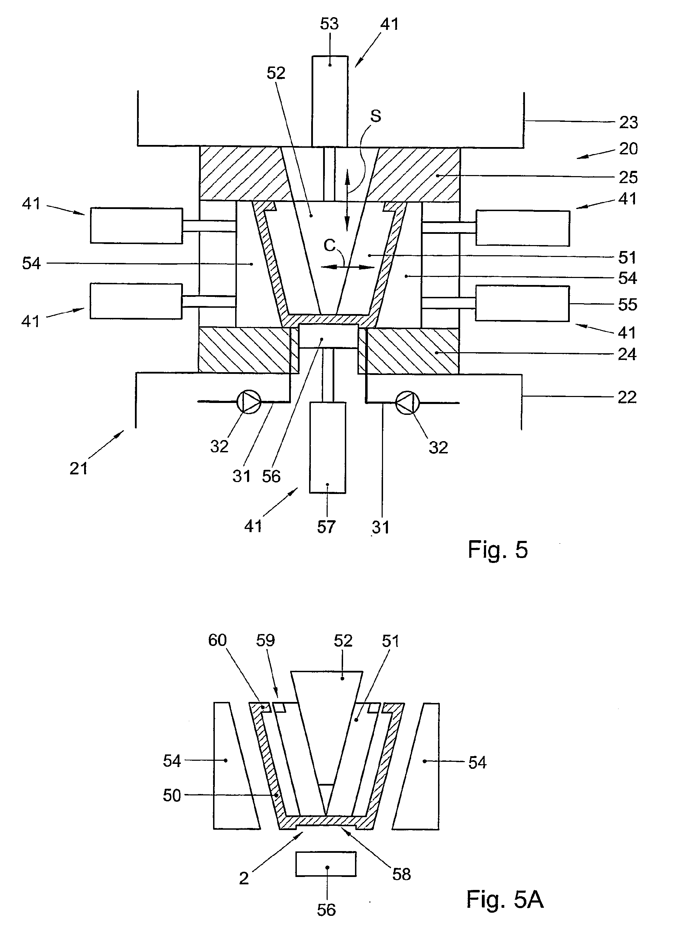

In Fig. 5, schematically, a mold 20 is shown, in an alternative embodiment. This mold 20 is suitable for forming a substantially frustoconical holder 50. In this embodiment, the first core part 27 comprises two slides 51, moveable in a second direction of movement C. Between the first slides 51, a first wedge 52 is included which, with the aid of a drive means 41, for instance an electrically drivable screw spindle 53, is moveable in the first direction S. Upon downward movement of the wedge 52 (in Fig. 5) the first slides 51 are moved outwards, to a product-forming second position. At the outside of the mold 20, at least of the mold cavity 32, second slides 54 are provided, drivable by, for instance, driving means 41 in the form of piston-cylinder assemblies 55, between a retracted, first position and a second position, moved forward. Below the mold cavity 32, a third slide 56 is provided, moveable in the first direction S with the aid of drive means 41 in the form of for instance, again, a piston-cylinder assembly 57.

In Fig. 5A, the different slides 61, 54 and 56 are shown in the retracted, second position, in Fig. 5 in the first position, moved forward, both around a holder 50. As clearly appears from the Figures, in the slides, in particular in the first slides 51, undercuts 59 may have been provided, for instance in an edge area thereof, so that projections 60, backs, grooves or the like can be provided in the holder which, otherwise, would not be clearing. In the bottom surface 2 of the holder 1, a narrowed portion 58 is provided through pushing the third slide 56 further.

It will be clear that the invention is not limited in any manner to the exemplary embodiments given in the drawing and the description. Many variations thereon are possible within the framework of the invention as outlined by the claims.

For instance, in a mold according to the invention, other numbers and/or other forms of slides, at least moving wall parts can be provided, which can for instance also be designed so as to be tilting. Different types of drive means can also be provided. The mold parts 22, 23 can be moved and be held closed in a different manner, while also multiple molds and/or stack molds can be built up in a comparable manner. It will further be clear that the first and second direction of movement can also include other angles than those shown of approximately 90°, while the directions of movement for different slides can also be different. The movements of the wedges and slides can have any desired orientation, as long as the first and a second direction of movement mutually include an angle.

These and many comparable embodiments are understood to fall within the framework of the invention as outlined by the claims.

## Claims

1. A mold (20), comprising at least two mold parts (24, 25), moveable relative to each other in a first direction (S) of movement, in which at least one mold cavity (32) is included, the mold cavity (32) being provided on at least one side with a wall part (33; 51, 54, 56) moveable in a second direction of movement (C) which is moveable between a first, retracted position and a second position moved forward, wherein the mold cavity (32), with said wall part (33; 51, 54, 56) in the second position, is in a desired product forming position and, with said wall part (33; 51, 54, 56) in the first position, has a volume greater than with said wall part in the second position, wherein the first (S) and the second direction (C) of movement mutually include an angle, wherein drive means (41) are provided for moving moveable wall parts (33; 51, 54, 56) in said second direction, wherein said drive means (41) are controllable independently of the movements of the mold parts (24, 25) in said first direction (S) **characterized in that** said mold (20) is a mold for manufacturing holders such as crates.

2. A mold (20) according to claim 1, wherein the first (S) and the second direction of movement (C) include an angle of between 20 and 90°, in particular an angle between 45 and 90°, preferably between 60 and 90° and more preferably at right angles.

3. A mold (20) according to any one of claims 1 or 2, wherein at least two moveable wall parts (33; 51, 54, 56) are provided in the at least one mold cavity (32) and wherein each moveable wall part (33; 51, 54, 56) has said second direction of movement (C), preferably approximately at right angles to the first direction of movement (S).

4. A mold according to claim 2 or 3, wherein a core part (26, 27; 52) of the mold cavity (32) is provided, wherein on at least three and preferably on four sides of said core part (26, 27; 52) a moveable wall part (33; 51, 54, 56) is provided, preferably in a mold part (24, 25) not carrying said core part (26, 27; 52).

5. A mold according to any one of claims 1-4, wherein means are provided for closing said mold by movement in said first direction (S) and keeping closed said mold by keeping said at least two mold parts (24, 25) stationary relative to each other, before moving said at least one movable wall part (33; 51, 54, 56) in said second direction.

6. A mold (20) according to any one of claims 1-5, wherein in said mold (20) in a closed position said at least one mold cavity (32) with said at least one movable wall part (33; 51, 54, 56) in said first position has said product forming shape except for a relatively wide space provided by said at least one movable wall part (33; 51, 54, 56) held in said first position.

7. A mold according to any one of the preceding claims, wherein in the mold a central core part (26) is provided, while on at least one side a second core part (27) is provided, at a distance from said central core part (26) and wherein the or a moveable wall part (33) is located at the side of said second core (27) part facing away from the central core part (26), and the second direction of movement (C) of the respective wall part (33) is directed towards the second core part (27) and/or the central core part (26), while the mold cavity (32) comprises a space (30A) between the central core part (26) and the second core part (27) and a space (37) between the second core part (27) and said respective wall part (33), which spaces (30A, 37) are in connection with each other, such that during use plastic can move from said space (30A) between the central core part (26) and the second core part (27) along the second core part (27) into said space (37) between the second core part (27) and the respective wall part (33) and can be pushed by the respective moveable wall part (33) against the second core part (27).

8. A mold according to any one of the preceding claims, wherein the at least one mold cavity (32) is designed for forming a holder (1) with a bottom surface (2) and a longitudinal wall (3) extending away from the bottom surface (2), the bottom surface (2) and/or the longitudinal wall (3) having a thickness which is small relative to the height (H) of the longitudinal wall (3), measured at right angles to the bottom surface (2), while the height (H) of the longitudinal wall is relatively great relative to the dimensions of the bottom surface (2), more in particular at least one quarter of a diagonal or central line of said bottom surface.

9. A mold according to claim 8, wherein the or at least one longitudinal wall (3) forming part (30A, 37) of the mold (20) is arranged for forming a cavity (7) in said longitudinal wall (3), at least part thereof, while a moveable wall part (33) is designed for forming at least one wall (4, 5) of said cavity (7).

10. A mold (20) according to any one of the preceding claims, wherein the mold cavity (32) comprises a wall part (56) moveable in the first direction (S) in the mold cavity (32), in particular near or in a bottom surface (2) forming part, while at least one injection opening (31) is provided in or near said bottom surface (2) forming part.

11. A mold according to any one of the preceding claims, wherein for the or each moveable wall part (33; 51, 54, 56) drive means (41) are provided.

12. An assembly of a mold (20) according to any one of the preceding claims and a pressing device, wherein the first direction of movement (S) is substantially parallel to the pressing direction of the pressing device.

13. An assembly according to claim 12, wherein the or each moveable wall part (33; 51, 54, 56), in particular drive means (41) therefor, are moveable independently of the pressing device.

14. A method for manufacturing a holder (1) with a bottom surface (2) and a longitudinal wall (3) reaching upwards from the bottom surface (2), wherein a mold (20), in particular according to any one of claims 1 - 11, in a first direction of movement (S) is closed and in a mold cavity (32) thereof, plastic is introduced while at least one moveable wall part (33; 51, 54, 56) of the mold cavity (32) has been or is brought into a retracted position, such that the distance (D) between said moveable wall part (33; 51, 54, 56) and an opposite wall part (27; 51, 54, 56) is relatively great, whereupon said at least one moveable wall part (33; 51, 54, 56) is moved forward in a second direction (C), in the direction of said opposite wall part (27; 51, 54, 56), such that said distance (D) is reduced and plastic included therebetween is pressed together and/or at least partly compressed, while said second direction of movement (C) includes an angle with said first direction (S) for closing of the mold, wherein said movement in said second direction (C) is at least partly controlled independently from said movement in said first direction (S).

15. A method according to claim 14, wherein the mold (20) is closed before the or each moveable wall part (33; 51, 54, 56) is moved in said second direction of movement (C) towards the opposite wall part (27; 51, 54, 56).

16. A method according to claim 14, wherein the or a said moveable wall part (33; 51, 54, 56) is moved in the direction of said opposite wall part (27; 51, 54, 56) while the plastic is introduced into the mold cavity (32).

17. A method according to claim 14, wherein the or a said moveable wall part (33; 51, 54, 56) is moved in the direction of said opposite wall part (27; 51, 54, 56) after at least 80% of the required plastic has been introduced into the mold cavity (32).

18. A method according to claim 17, wherein the or each moveable wall part (33; 51, 54, 56) is moved at a speed such that in the plastic at least adjacent the respective moveable wall part (33; 51, 54, 56) adiabatic heat development occurs.

19. A method according to any one of claims 14 - 18, wherein a holder (2) with at least partly hollow walls (3) is formed.

20. A mold (20) according to any one of claims 1 - 11, wherein a first one of said at least two mold parts (23, 24) comprises a core part (26, 27; 51, 54, 56), wherein a second of said at least two mold parts (23, 24) has wall parts facing said core part when the mold (20) is in a closed position, wherein said movable wall parts (33; 51, 54, 56) are provided in or form said wall parts facing said core part (26, 27; 51, 54, 56).

21. A mold (20) according to claim 20, wherein said second direction (C) for a movable wall part (33; 51, 54, 56) extends perpendicular to the opposing surfaces of said core part (26, 27).

22. A mold according to any one of claims 1 - 11, 20 or 21, wherein a first one of said mold parts (23, 24) comprises a core part (26, 27) having a leading end (29), wherein a second of said at least two mold parts (34, 24) has a supply opening (31) terminating in a space between said leading end (29) and said second one of said mold parts (23, 24).

## Patentansprüche

1. Form (20) mit mindestens zwei relativ zueinander in einer ersten Bewegungsrichtung (S) bewegbaren Formteilen (24,25), die mindestens einen Formungshohlraum (32) zwischen sich einschließen, wobei der Formungshohlraum (32) an mindestens einer Seite mit einem in einer zweiten Bewegungsrichtung (C) bewegbaren Wandteil (33;51,54,56) versehen ist, der zwischen einer eingefahrenen ersten Position und einer ausgefahrenen zweiten Position bewegbar ist, wobei der Formungshohlraum (32) bei in der zweiten Position befindlichem Wandteil (33;51,54,56) in einer gewünschten Produktformungsposition angeordnet ist und bei in der ersten Position befindlichem Wandteil (33; 51,54,56) ein größeres Volumen hat als bei in der zweiten Position befindlichem Wandteil, wobei die erste (S) und die zweite (C) Bewegungsrichtung zusammen einen Winkel einschließen, wobei Antriebsvorrichtungen (41) vorgesehen sind, um die bewegbaren Wandteile (33;51,54,56) in die zweite Richtung zu bewegen, wobei die Antriebsvorrichtungen (41) unabhängig von den in die erste Richtung erfolgenden Bewegungen der Formteile (24,25) steuerbar sind,
**dadurch gekennzeichnet, dass** die Form (20) eine Form zum Herstellen von Haltern wie z.B. Flaschenkästen ist.

2. Form (20) nach Anspruch 1, bei der die erste (S) und die zweite (C) Bewegungsrichtung einen Winkel zwischen 20° und 90°, insbesondere einen Winkel zwischen 45° und 90° und vorzugsweise zwischen 60° und 90° einschließen und besonders bevorzugt rechtwinklig zueinander verlaufen.

3. Form (20) nach einem der Ansprüche 1 oder 2, bei der mindestens zwei bewegbare Wandteile (33;51,54,56) in dem mindestens einen Formungshohlraum (32) vorgesehen sind und bei der die zweite Bewegungsrichtung (C) jedes bewegbaren Wandteils (33;51,54,56) vorzugsweise im Wesentlichen rechtwinklig zu der ersten Bewegungsrichtung (S) verläuft.

4. Form nach Anspruch 2 oder 3, bei der ein Kernteil (26,27;52) des Formungshohlraums (32) vorgesehen ist, wobei an mindestens drei und vorzugsweise vier Seiten des Kernteils (26,27;52) ein bewegbarer Wandteil (33;51,54,56) vorgesehen ist, und zwar vorzugsweise in einem Formteil (24,25), der den Kernteil (26,27;52) nicht trägt.

5. Form nach einem der Ansprüche 1-4, bei der Vorrichtungen vorgesehen sind, um die Form durch Bewegung in die erste Richtung (S) zu schließen und um die Form geschlossen zu halten, indem die mindestens zwei Formteile (24,25) stationär zueinander gehalten werden, bevor der mindestens eine bewegbare Wandteil (33;51,54,56) in die zweite Richtung bewegt wird.

6. Form (20) nach einem der Ansprüche 1-5, bei der, wenn sich die Form (20) in der Schließposition befindet, der mindestens eine Formungshohlraum (32) mit dem in der ersten Position befindlichen mindestens einen bewegbaren Wandteil (33;51,54,56) die Produktformungsform hat, jedoch mit Ausnahme eines relativ breiten Raums, der von dem in der ersten Position befindlichen mindestens einen bewegbaren Wandteil (33;51,54,56) gebildet wird.

7. Form nach einem der vorhergehenden Ansprüche, bei der ein zentraler Kernteil (26) in der Form vorgesehen ist, während an mindestens einer Seite ein zweiter Kernteil (27) in einem Abstand von dem zentralen Kernteil (26) vorgesehen ist, wobei der oder ein bewegbarer Wandteil (33) an der von dem zentralen Kernteil (26) weg weisenden Seite des zweiten Kerns (27) angeordnet ist, und die zweite Bewegungsrichtung (C) des betreffenden Wandteils (33) zu dem zweiten Kernteil (27) und/oder dem zentralen Kernteil (26) gerichtet ist, wobei der Formungshohlraum (32) einen Raum (30A) zwischen dem zentralen Kernteil (26) und dem zweiten Kernteil (27) und einen Raum (37) zwischen dem zweiten Kernteil (27) und dem betreffenden Wandteil (33) aufweist, wobei diese Räume (30A,37) derart in Verbindung miteinander stehen, dass während des Betriebs Plastik aus dem zwischen dem zentralen Kernteil (26) und dem zweiten Kernteil (27) gelegenen Raum (30A) entlang des zweiten Kernteils (27) in den zwischen dem zweiten Kernteil (27) und dem betreffenden Wandteil (33) gelegenen Raum (37) strömen kann und mittels des betreffenden bewegbaren Wandteils (33) gegen den zweiten Kernteil (27) gedrückt werden kann.

8. Form nach einem der vorhergehenden Ansprüche, bei der der mindestens eine Formungshohlraum (32) ausgebildet ist zum Formen eines Halters (1) mit einer Bodenfläche (2) und einer von der Bodenfläche (2) abstehenden Längswand (3), wobei die Bodenfläche (2) und/oder die Längswand (3) eine Dicke haben, die relativ zu der rechtwinklig zu der Bodenfläche (2) gemessenen Höhe (H) der Längswand (3) klein ist, während die Höhe (H) der Längswand in Relation zu den Abmessungen der Bodenfläche (2) relativ groß ist und insbesondere mindestens ein Viertel einer Diagonal- oder Mittellinie der Bodenfläche beträgt.

9. Form nach Anspruch 8, bei der die oder mindestens eine Längswand (3), die einen Teil (30A,37) der Form (20) bildet, derart angeordnet ist, dass sie in der Längswand (3) einen Hohlraum (7), mindestens jedoch einen Teil desselben, bildet, während ein bewegbarer Wandteil (39) zur Bildung mindestens einer Wand (4,5) des Hohlraums (7) ausgebildet ist.

10. Form (20) nach einem der vorhergehenden Ansprüche, bei der der Formungshohlraum (32) einen Wandteil (56) aufweist, der in dem Formungshohlraum (32) in einer ersten Richtung (S) bewegbar ist, insbesondere nahe oder in einem zum Formen der Bodenfläche (2) ausgebildeten Teil, wobei mindestens eine Einspritzöffnung (31) in oder nahe dem zum Formen der Bodenfläche (2) ausgebildeten Teil vorgesehen ist.

11. Form nach einem der vorhergehenden Ansprüche, bei der Antriebsvorrichtungen (41) für den oder jeden bewegbaren Wandteil (33;51,54, 56) vorgesehen sind.

12. Anordnung mit einer Form (20) nach einem der vorhergehenden Ansprüche und mit einer Pressvorrichtung, wobei die erste Bewegungsrichtung (S) im Wesentlichen parallel zu der Pressrichtung der Pressvorrichtung verläuft.

13. Anordnung nach Anspruch 12, bei der der oder jeder bewegbare Wandteil (33;51,54,56) und insbesondere dessen Antriebsvorrichtung (41) unanhängig von der Pressvorrichtung bewegbar ist.

14. Verfahren zum Herstellen eines Halters (1) mit einer Bodenfläche (2) und einer von der Bodenfläche (2) nach oben hin abstehenden Längswand (3), bei dem eine insbesondere gemäß einem der Ansprüche 1-11 ausgebildete Form (20) in einer ersten Bewegungsrichtung (S) geschlossen ist und in einen Formungshohlraum (32) der Form Plastik eingeführt wird, während mindestens ein bewegbarer Wandteil (33;51, 54,56) des Formungshohlraums (32) in eine eingefahrene Position gebracht worden ist oder gebracht wird, derart, dass der Abstand (D) zwischen dem bewegbaren Wandteil (33;51,54,56) und einem gegenüberliegenden Wandteil (27;51,54,56) relativ groß ist, woraufhin der mindestens eine bewegbare Wandteil (33;51,54,56) in eine zweite Richtung (C), nämlich die Richtung des gegenüberliegenden Wandteils (27;51,54,56), derart vorbewegt wird, dass der Abstand (D) reduziert wird und das zwischen den Wandteilen befindliche Plastik zusammengepresst wird und/oder mindestens teilweise gepresst wird, wobei die zweite Bewegungsrichtung (C) mit der zum Schließen der Form vorgesehenen ersten Richtung einen Winkel einschließt, wobei die Bewegung in der zweiten Richtung (C) mindestens teilweise unabhängig von der Bewegung in der ersten Richtung (S) gesteuert wird.

15. Verfahren nach Anspruch 14, bei dem die Form (20) geschlossen wird, bevor der oder jeder bewegbare Wandteil (33;51,54,56) in der zweiten Bewegungsrichtung (C) zu dem gegenüberliegenden Wandteil (27;51, 54,56) bewegt wird.

16. Verfahren nach Anspruch 14, bei dem der oder jeder bewegbare Wandteil (33;51,54,56) in der Richtung des gegenüberliegenden Wandteils (27;51,54,56) bewegt wird, während das Plastik in den Formungshohlraum (32) eingeführt wird.

17. Verfahren nach Anspruch 14, bei dem der oder jeder bewegbare Wandteil (33;51,54,56) in der Richtung des gegenüberliegenden Wandteils (27;51,54,56) bewegt wird, nachdem mindestens 80% des erforderlichen Plastiks in den Formungshohlraum (32) eingeführt worden sind.

18. Verfahren nach Anspruch 17, bei dem der oder jeder bewegbare Wandteil (33;51,54,56) mit einer derartigen Geschwindigkeit bewegt wird, dass in dem Plastik mindestens nahe dem jeweiligen bewegbaren Wandteil (33;51,54,56) eine adiabatische Wärmentwicklung auftritt.

19. Verfahren nach einem der Ansprüche 14-18, bei dem ein Halter (2) mit mindestens teilweise hohlen Wänden (3) ausgebildet wird.

20. Form (20) nach einem der Ansprüche 1-11, bei dem ein erster der mindestens zwei Formteile (23,24) einen Kernteil (26,27;51,54,56) aufweist, wobei ein zweiter der mindestens zwei Formteile (23,24) Wandteile hat, die dem Kernteil zugewandt sind, wenn die Form (20) sich in einer Schließposition befindet, wobei die bewegbaren Wandteile (33;51,54,56) in den dem Kernteil (26,27;51,54,56) zugewandten Wandteil vorgesehen sind oder diese bilden.

21. Form (20) nach einem der Anspruch 20, bei dem die zweite Richtung (C) für einen bewegbaren Wandteil (33;51,54,56) rechtwinklig zu der gegenüberliegenden Fläche des Kernteils (26,27) verläuft.

22. Form (20) nach einem der Ansprüche 1-11, bei dem ein erster der Formteile (23,24) einen Kernteil (26,27) mit einem vorauseilenden Ende (29) aufweist, wobei ein zweiter der mindestens zwei Formteile (23,24) eine Zuführöffnung (31) aufweist, die in einem Raum zwischen dem vorauseilenden Ende (29) und dem zweiten der Formteile (23,24) endet.

## Revendications

1. Moule (20), comprenant au moins deux parties de moule (24, 25), mobiles l'une par rapport à l'autre dans une première direction (S) de déplacement, dans lequel au moins une cavité de moule (32) est incluse, la cavité de moule (32) étant pourvue, au moins d'un côté, d'une partie de paroi (33 ; 51, 54, 56) mobile dans une deuxième direction (C) de déplacement, qui est mobile entre une première position rétractée et une deuxième position de déplacement en avant, dans lequel la cavité de moule (32), alors que ladite partie de paroi (33 ; 51, 54, 56) est dans la deuxième position, est dans une position de formation de produit souhaitée et, lorsque ladite partie de paroi (33 ; 51, 54, 56) est dans la première position, a un volume supérieur à celui lorsque ladite partie de paroi est dans la deuxième position, dans lequel les première (S) et deuxième (C) directions de déplacement forment mutuellement un angle, dans lequel des moyens d'entraînement (41) sont prévus pour déplacer les parties de paroi (33 ; 51, 54, 56) mobiles dans ladite deuxième direction, dans lequel lesdits moyens d'entraînement (41) peuvent être commandés indépendamment des déplacements des parties de moule (24, 25) dans ladite première direction (S), **caractérisé en ce que** ledit moule (20) est un moule pour fabriquer des supports tels que des caisses à claire-voie.

2. Moule (20) selon la revendication 1, dans lequel les première (S) et deuxième (C) directions de déplacement forment un angle entre 20° et 90°, en particulier un angle entre 45° et 90°, de préférence entre 60° et 90°, et plus préférablement un angle droit.

3. Moule (20) selon l'une quelconque des revendications 1 et 2, dans lequel au moins deux parties de paroi (33 ; 51, 54, 56) mobiles sont prévues dans ladite au moins une cavité de moule (32), et dans lequel chaque partie de paroi (33 ; 51, 54, 56) mobile a ladite deuxième direction (C) de déplacement, de préférence approximativement à angle droit par rapport à la première direction (S) de déplacement.

4. Moule selon la revendication 2 ou 3, dans lequel une partie de noyau (26, 27 ; 52) de la cavité de moule (32) est prévue, dans lequel, sur au moins trois et de préférence sur quatre côtés de ladite partie de noyau (26, 27 ; 52), une partie de paroi (33 ; 51, 54, 56) mobile est prévue, de préférence dans une partie de moule (24, 25) ne supportant pas ladite partie de noyau (26, 27 ; 52).

5. Moule selon l'une quelconque des revendications 1 à 4, dans lequel des moyens sont prévus pour fermer ledit moule par un déplacement dans ladite première direction (S) et pour maintenir ledit moule fermé en maintenant lesdites au moins deux parties de moule (24, 25) fixes l'une par rapport à l'autre, avant de déplacer ladite au moins une partie de paroi (33 ; 51, 54, 56) mobile dans ladite deuxième direction.

6. Moule (20) selon l'une quelconque des revendications 1 à 5, dans lequel, lorsque ledit moule (20) est dans une position fermée, ladite au moins une cavité de moule (32), lorsque ladite au moins une partie de paroi (33 ; 51, 54, 56) mobile est dans ladite première position, a ladite forme de formation de produit à l'exception d'un espace relativement grand réalisé par ladite au moins une partie de paroi (33 ; 51, 54, 56) mobile maintenue dans ladite première position.

7. Moule selon l'une quelconque des revendications précédentes, dans lequel, dans le moule, une partie de noyau centrale (26) est prévue, alors qu'une deuxième partie de noyau (27) est prévue au moins d'un côté, à une distance de ladite partie de noyau centrale (26), et dans lequel la ou une partie de paroi (33) mobile est placée du côté de ladite deuxième partie de noyau (27) orienté à l'opposé de la partie de noyau centrale (26) et la deuxième direction (C) de déplacement de la partie de paroi (33) respective est dirigée vers la deuxième partie de noyau (27) et/ou la partie de noyau centrale (26), tandis que la cavité de moule (32) comprend un espace (30A) entre la partie de noyau centrale (26) et la deuxième partie de noyau (27) et un espace (37) entre la deuxième partie de noyau (27) et ladite partie de paroi (33) respective, lesquels espaces (30A, 37) sont reliés l'un à l'autre, de sorte que, en utilisation, une matière plastique peut se déplacer dudit espace (30A) entre la partie de noyau centrale (26) et la deuxième partie de noyau (27) le long de la deuxième partie de noyau (27) dans ledit espace (37) entre la deuxième partie de noyau (27) et la partie de paroi (33) respective et peut être poussée par la partie de paroi (33) mobile respective contre la deuxième partie de noyau (27).

8. Moule selon l'une quelconque des revendications précédentes, dans lequel ladite au moins une cavité de moule (32) est conçue pour former un support (1) avec une surface de fond (2) et une paroi longitudinale (3) s'étendant à l'opposé de la surface de fond (2), la surface de fond (2) et/ou la paroi longitudinale (3) ayant une épaisseur qui est petite par rapport à la hauteur (H), de la paroi longitudinale (3), mesurée à angle droit par rapport à la surface de fond (2), tandis que la hauteur (H) de la paroi longitudinale est relativement grande par rapport aux dimensions de la surface de fond (2), plus particulièrement d'au moins un quart de la diagonale ou de la médiane de ladite surface de fond.

9. Moule selon la revendication 8, dans lequel la ou au moins une partie (30A, 37) formant la paroi longitudinale (3) du moule (20) est agencée pour former une cavité (7) dans ladite paroi longitudinale (3), au moins une partie de celle-ci, tandis qu'une partie de paroi (33) mobile est conçue pour former au moins une paroi (4, 5) de ladite cavité (7).

10. Moule (20) selon l'une quelconque des revendications précédentes, dans lequel la cavité de moule (32) comprend une partie de paroi (56) mobile dans la première direction (S) dans la cavité de moule (32), en particulier à proximité de ou dans une partie formant la surface de fond (2), tandis qu'au moins une ouverture d'injection (31) est prévue dans ou à proximité de ladite partie formant la surface de fond (2).

11. Moule selon l'une quelconque des revendications précédentes, dans lequel des moyens d'entraînement (41) sont prévus pour la ou chaque partie de paroi (33 ; 51, 54, 56) mobile.

12. Ensemble d'un moule (20) selon l'une quelconque des revendications précédentes et dispositif de pression, dans lequel la première direction (S) de déplacement est sensiblement parallèle à la direction de pression du dispositif de pression.

13. Ensemble selon la revendication 12, dans lequel la ou chaque partie de paroi (33 ; 51, 54, 56) mobile, en particulier les moyens d'entraînement (41) de celle-ci, est mobile indépendamment du dispositif de pression.

14. Procédé pour fabriquer un support (1) avec une surface de fond (2) et une paroi longitudinale (3) s'élevant vers le haut à partir de la surface de fond (2), dans lequel un moule (20), en particulier selon l'une quelconque des revendications 1 à 11, est fermé dans une première direction (S) de déplacement et, dans une cavité de moule (32) de celui-ci, une matière plastique est introduite alors qu'au moins une partie de paroi (33 ; 51, 54, 56) mobile de la cavité de moule (32) a été ou est mise dans une position rétractée, de sorte que la distance (D) entre ladite partie de paroi (33 ; 51, 54, 56) mobile et une partie de paroi (27 ; 51, 54, 56) opposée est relativement grande, sur quoi ladite au moins une partie de paroi (33 ; 51, 54, 56) mobile est déplacée en avant dans une deuxième direction (C), dans la direction de ladite partie de paroi (27 ; 51, 54, 56) opposée, de sorte que ladite distance (D) est réduite et qu'une matière plastique incluse entre elles est pressée globalement et/ou au moins partiellement comprimée, tandis que ladite deuxième direction (C) de déplacement forme un angle avec ladite première direction (S) pour fermer le moule, dans lequel ledit déplacement dans ladite deuxième direction (C) est au moins partiellement commandé indépendamment dudit déplacement dans ladite première direction (S).

15. Procédé selon la revendication 14, dans lequel le moule (20) est fermé avant que la ou chaque partie de paroi (33 ; 51, 54, 56) mobile soit déplacée dans ladite deuxième direction (C) de déplacement vers la partie de paroi (27 ; 51, 54, 56) opposée.

16. Procédé selon la revendication 14, dans lequel la ou une dite partie de paroi (33 ; 51, 54, 56) mobile est déplacée dans la direction de ladite partie de paroi (27 ; 51, 54, 56) opposée, alors que la matière plastique est introduite dans la cavité de moule (32).

17. Procédé selon la revendication 14, dans lequel la ou une dite partie de paroi (33 ; 51, 54, 56) mobile est déplacée dans la direction de ladite partie de paroi (27 ; 51, 54, 56) opposée après l'introduction d'au moins 80 % de la matière plastique nécessaire dans la cavité de moule (32).

18. Procédé selon la revendication 17, dans lequel la ou chaque partie de paroi (33 ; 51, 54, 56) mobile est déplacée à une vitesse telle que dans la matière plastique au moins adjacente à la partie de paroi (33 ; 51, 54, 56) mobile respective, un développement de chaleur adiabatique se produit.

19. Procédé selon l'une quelconque des revendications 14 à 18, dans lequel un support (2) avec des parois (3) au moins partiellement creuses est formé.

20. Moule (20) selon l'une quelconque des revendications 1 à 11, dans lequel une première desdites au moins deux parties de moule (23, 24) comprend une partie de noyau (26, 27 ; 51, 54, 56), dans lequel une deuxième desdites au moins deux parties de moule (23, 24) a des parties de paroi faisant face à ladite partie de noyau lorsque le moule (20) est dans une position fermée, dans lequel lesdites parties de paroi (33 ; 51, 54, 56) mobiles sont prévues dans ou forment lesdites parties de paroi faisant face à ladite partie de noyau (26, 27 ; 51, 54, 56).

21. Moule (20) selon la revendication 20, dans lequel ladite deuxième direction (C) pour une partie de paroi (33 ; 51, 54, 56) mobile s'étend perpendiculairement à la surface opposée de ladite partie de noyau (26, 27).

22. Moule selon l'une quelconque des revendications 1 à 11, 20 ou 21, dans lequel une première desdites parties de paroi (23, 24) comprend une partie de noyau (26, 27) ayant une extrémité avant (29), dans lequel une deuxième desdites au moins deux parties de moule (34, 24) comporte une ouverture d'alimentation (31) se terminant dans un espace entre ladite extrémité avant (29) et ladite deuxième desdites parties de moule (23, 24).
